# EUROPÄISCHE PATENTANMELDUNG

(11) **EP 1 855 231 A1**
(43) Veröffentlichungstag der Anmeldung: **14.11.2007**
(21) Anmeldenummer: 06113663.6
(22) Anmeldetag: 09.05.2006
(51) Int. Cl.: G06K 19/07, G06K 19/077

(54) **Datenspeicherkarte mit mehreren Schnittstellen**

(71) Anmelder: Lindemann, Zina, 8314 Kyburg (CH); Bringolf, Alexander, 8212 Neuhausen am Rheinfall (CH)
(72) Erfinder: Lindemann, Zina, 8314 Kyburg (CH); Bringolf, Alexander, 8212 Neuhausen am Rheinfall (CH)
(74) Vertreter: Hepp, Dieter

(57) **Zusammenfassung**

Ein Datenträger (1) wird insbesondere zur Verwendung als Gesundheitskarte vorgeschlagen. Der Datenträger (1) weist eine integrierte Schaltung (2) mit einer ersten Schnittstelle (3) auf. Über die erste Schnittstelle (3) ist ein Datenaustausch mit einen Chipkartenleser möglich. Der Datenträger (1) weist eine zweite Schnittstelle (4) zum Datenaustausch mit einem Rechner auf. Der Datenträger (1) ist ausserdem mit einem zusätzlichen Speicher (5) (z. B. Flashspeicher) versehen. Der zusätzliche Speicher (5) ist wenigsten mit der zweiten Schnittstelle (4) verbunden oder verbindbar. Zusätzliche Funktionalitäten wie Funkmodul (gemäss Mobilfunkstandards z. B. GSM oder UMTS, Bluetooth, WLAN oder NFC, für over-the-air Synchronisation), GPS-Modul (Lokalisierung) sowie ein Fingerprint Reader (Identifikation) stellen eine langfristige Verwendung der Gesundheitskarte mit modernsten Technikstandard sicher.

## Beschreibung

Die Erfindung betrifft einen Datenspeicher mit den Merkmalen des Oberbegriffs der unabhängigen Patentansprüche. Der Datenspeicher eignet sich unter anderem und insbesondere zur Verwendung als Gesundheitkarte. Eine weitere Verwendung für den Bankensektor und für Telecom-Operatoren ist denkbar. Elektronische Gesundheitskarten mit Patientendaten sind bekannt. Sie entsprechen einem Bedürfnis nach Vereinfachung der Administration im Zusammenhang mit Versicherungsleistungen und dem Angebot von ärztlichen Dienstleistungen. Zu diesem Zweck werden Chipkarten verwendet, die eine integrierte Schaltung aufweisen, in der Patientendaten gespeichert werden.

Beispielsweise sind in Deutschland Krankenversichertenkarten in der Form von herkömmlichen Chipkarten bekannt. Auf dem Chip mit einer Kapazität von 256 kByte sind beispielsweise Namen einer Krankenkasse, Versichertennummer und weitere persönliche Daten des Karteninhabers enthalten. Mit speziellen Chipkartenlesern kann ein Arzt den Inhalt der Karte lesen. Diese bekannten Krankenversichertenkarten weisen aber verschiedene Nachteile auf.

Ein erstes Problem besteht in der beschränkten Speicherkapazität von solchen Karten. Es wäre wünschenswert, nötigenfalls ganze Krankengeschichten, allenfalls mit Röntgenbildern oder ähnlichem (z.B. Blutgruppe, Allergien, Medikamentenunverträglichkeit, aktuelle Krankheiten, Medikation und Unfallfolgen, etc.) auf der Gesundheitskarte zu speichern. Die Kapazität bekannter Chipkarten reicht heute dafür nicht aus.

Mit dem Wechsel zu einer Gesundheitskarte, welche weitere Informationen enthält, drängt sich der Einsatz von Prozessorchipkarten auf. Sobald weitere Daten auf der Karte gespeichert werden, stellt sich das Problem von Datensicherheit, insbesondere im Hinblick auf Zugänglichkeit von sensiblen Patientendaten.

Ein weiterer Nachteil von bekannten Karten liegt darin, dass ein Karteninhaber den Inhalt der Karte selbst nicht analysieren kann, wenn er über keinen Chipkartenleser verfügt. Deshalb ist die Akzeptanz von solchen Karten beim Benutzer gering.

Es sind bereits verschiedene Lösungen bekannt, um die Zugreifbarkeit von Daten auf Chipkarten zu vereinfachen. Beispielsweise gibt es Adapter, mittels welchen eine Chipkarte von einem Personal Computer gelesen werden kann. Aus EP 1 429 283 ist ein Datenträger in Gestalt einer Chipkarte bekannt, bei dem zusätzlich eine USB-Schnittstelle vorhanden ist, mittels welcher die Karte mit einem Personal Computer verbunden werden kann. Aus der koreanischen Veröffentlichung KR 10-2003-0018203 A ist eine Smart Card mit einer USB Interfacefunktion bekannt. Kartenadapter sind beispielsweise aus DE 10 2004 003307 oder aus US 5 161 992 bekannt.

Trotz all diesen Vorschlägen sind bis heute aber keine Karten bekannt, welche die oben erwähnten Probleme, insbesondere im Hinblick auf die Möglichkeit des Speichern von umfangreichen Daten und im Hinblick auf Akzeptanz durch den Benutzer lösen.

Es ist deshalb eine Aufgabe der vorliegenden Erfindung, die Nachteile des Bekannten zu vermeiden, insbesondere also einen Datenträger zu schaffen, der sich als Gesundheitskarte eignet. Die Gesundheitskarte soll die Speicherung von erweiterten Patientendaten, beispielsweise der Krankengeschichte erlauben. Es soll eine Möglichkeit bestehen, dass der Karteninhaber selbst und bewussten Zugang zu Teilen der gespeicherten Daten auf einfache Weise hat (Karteninhaber hat Leserecht auf allen Daten, Schreibrecht auf Teilen). Ausserdem soll die Sicherheit der gespeicherten Daten auf möglichst einfache Weise gewährleistet sein.

Erfindungsgemäss werden diese und andere Aufgaben mit einem Datenträger mit den Merkmalen des kennzeichnenden Teils der unabhängigen Ansprüche gelöst.

Der erfindungsgemässe Datenspeicher weist in an sich bekannter Art und Weise eine integrierte Schaltung mit einer ersten Schnittstelle auf. Über diese Schnittstelle kann der Datenträger mit einem herkömmlichen Chipkartenleser Daten austauschen. Im Hinblick auf die integrierte Schaltung und die Schnittstelle ist der Datenträger als herkömmliche Chipkarte aufgebaut, insbesondere gemäss der Norm ISO/IEC 7816. Der Datenträger ist ausserdem mit einer zweiten Schnittstelle zum Austausch von Daten zwischen dem Datenträger und einer Rechneranordnung versehen. Dabei handelt es sich typischerweise um einen herkömmlichen Personal Computer. Dank dieser zweiten Schnittstelle ist es möglich, auf den Inhalt des Datenspeichers auch zuzugreifen, wenn kein Chipkartenleser vorhanden ist. Gleichzeitig ermöglicht aber die erste Schnittstelle einen Datenaustausch mit beispielsweise in Arztpraxen vorhandenen bestehenden Chipkartenlesern.

Die Chipkarte ist ausserdem mit einem zusätzlichen Speicher versehen. Hier handelt es sich insbesondere um einen Flashspeicher. Der Flashspeicher ist wenigstens mit der zweiten Schnittstelle verbunden oder verbindbar. Auf diese Weise können sehr grosse Datenmengen wie beispielsweise eine Krankengeschichte auf dem erfindungsgemässen Datenspeicher gespeichert werden und auch wieder gelesen werden.

Bevorzugt ist die zweite Schnittstelle eine USB-Schnittstelle. Über eine USB-Schnittstelle lässt sich der Datenspeicher besonders einfach mit herkömmlichen Personal Computern verbinden, welche über USB Anschlüsse verfügen. Der erfindungsgemäss Datenspeicher ist also gewissermassen eine Kombination zwischen einer herkömmlichen Chipkarte oder Smart Card mit reduzierter Speicherkapazität und beschränkter Zugänglichkeit mit einem USB Speicher mit einfacher Zugänglichkeit und wenig Einschränkungen im Hinblick auf die mögliche Speicherkapazität.

Der Datenträger kann ausserdem alternativ oder zusätzlich mit Mitteln zur drahtlosen Datenübertragung versehen sein. Hier kann es sich insbesondere um Module für Bluetooth-Übermittlung, W-LAN-Übermittlung, Near Field Communication (NFC) mittels RFID oder für Mobiltelefonie-Standards (lizenzierte Frequenzbereiche) handeln. Auch ist ein Modul mit GPS Funktionalitäten vorstellbar, so dass in einem Notfall der Patient lokalisiert werden kann.

Damit lassen sich Daten allenfalls auch drahtlos mit Daten auf einen Personal Computer synchronisieren.

Der zusätzliche Speicher ist zur Aufnahme von sensiblen Patientendaten ausgebildet. Es ist deshalb besonders bevorzugt, den zusätzlichen Speicher in öffentliche und private Bereiche aufzuteilen. Die öffentlichen Bereiche können dabei beispielsweise für Notfälle nützliche Informationen wie Blutgruppe, Allergien oder ähnliches enthalten. Der private Bereich ist über Passwort (oder PIN-Code) gesichert und kann sensible Daten wie beispielsweise die Krankengeschichte enthalten. Diese Daten können beispielsweise nur durch den Arzt und durch den Benutzer gelesen werden. Die Aufteilung von Speichern in solche privaten und öffentlichen Bereiche ist bekannt. Sie wird hier nicht im Detail beschrieben. Eine erste Identifizierung oder Authentifizierung mit dem Besitzer der Gesundheitskarte wird über ein auf der Gesundheitskarte integriertes Passfoto ermöglicht (auf Skizze nicht gezeigt).

Der zusätzliche Speicher kann ausserdem in beschreibbare und nicht beschreibbare, d.h. nur lesbare Abschnitte unterteilt sein. Dies ist insbesondere sinnvoll, wenn nicht veränderliche Patientendaten wie beispielsweise Versichertennummern, Geburtstag etc. und veränderliche Daten wie eine Krankengeschichte gleichzeitig auf dem Datenträger gespeichert werden sollen oder wenn vom Arzt hinterlegte Rezepte, oder Krankengeschichte durch den Patienten nicht verändert werden dürfen. Das heisst, Zugriffs- und Bearbeitungsrechte können software- und / oder hardwaretechnisch unterschiedlich für die beteiligten Anspruchsgruppen vergeben werden (unterschiedlich z.B. für Patienten, Versicherer, Leistungserbringer).

Gemäss einer weiteren Ausführungsform der Erfindung kann der Datenträger ausserdem mit einer Stromversorgung, insbesondere einem Akku versehen sein. Dies ist insbesondere im Zusammenhang mit der Verwendung von drahtlosen Kommunikationsmitteln bevorzugt.

Die zweite Schnittstelle kann ausserdem einen Kontaktbereich aufweisen, der von der Chipkarte wegbewegbar ist. Typischerweise kann der Kontaktbereich herausschiebbar oder wegklappbar sein. Auf diese Weise kann der Datenträger kompakt ausgebildet sein und trotzdem eine mechanische Verbindung zwischen einem Stecker der Schnittstelle und einer Rechneranordnung erlauben.

Der Datenträger ist typischerweise in einem Gehäuse enthalten, welche elektronische Komponenten wie beispielsweise den zusätzlichen Speicher umfasst. Gemäss einer weiteren bevorzugten Ausführungsform der Erfindung weist das Gehäuse in einem Randbereich benachbart zu Kontakten der ersten Schnittstelle Dimensionen auf, die den Dimensionen von Standardchipkarten entsprechen. Dadurch ist der Datenträger einfach in herkömmliche Chipleser einführbar. Gleichzeitig kann das Gehäuse in einem Randbereich entfernt von den Kontakten der ersten Schnittstelle eine grössere Dicke aufweisen. Deshalb können in diesem Bereich ohne Rücksicht auf Dimensionen der ersten Schnittstelle elektronische Komponenten wie beispielsweise Speicher oder Kommunikationsmodule angeordnet werden.

Besonders bevorzugt ist der Datenträger einteilig ausgebildet, d.h. dass erste und zweite Schnittstelle, integrierte Schaltung untrennbar miteinander verbunden sind.

Alternativ ist es aber auch denkbar, den Datenträger zweiteilig auszubilden. In einem Speicherteil kann in diesem Fall der Speicher und die zweite Schnittstelle angeordnet sein. In einem Kartenteil kann die erste Schnittstelle und die integrierte Schaltung angeordnet sein. In diesem Fall weist das Speicherteil eine dritte Schnittstelle auf, welche zum Datenaustausch zwischen dem Speicherteil und dem Kartenteil dient. Auf diese Weise wird ebenfalls die Zugänglichkeit von Daten auf dem Kartenteil sichergestellt, welches in bekannter Art und Weise wie eine Chipkarte aufgebaut ist. Der Speicherteil dient gewissermassen als Adapter. Gleichzeitig können auf dem Speicherteil aber erweiterte Daten geschrieben werden. Auf diese Weise können zusätzliche Sicherheitsmechanismen im Hinblick auf Datensicherheit implementiert werden. So könnten beispielsweise auf der Chipkarte nur die öffentlich zugänglichen Daten vorhanden sein während auf dem Speicherteil gesichert sensible Daten gespeichert werden.

Diese Ausführungsform der Erfindung entspricht also im Wesentlichen einem Datenspeicher mit einem Flashspeicher, welcher zusätzlich eine Schnittstelle zum Kontakt mit einer herkömmlichen Chipkarte aufweist. Ein weiterer Aspekt der Erfindung betrifft deshalb einen Datenspeicher, insbesondere einen Flashspeicher, welcher eine Schnittstelle zum Datenaustausch mit einer herkömmlichen Rechenanordnung aufweist und welcher eine dritte Schnittstelle zum Datenaustausch mit einer Chipkarte enthält. Selbstverständlich können auch in einem solchen Datenträger zusätzliche Elemente wie drahtlose Kommunikationsmodule enthalten sein. Auch kann ein solcher Datenträger in öffentliche und private oder in beschreibbar oder nur lesbare Abschnitte in der vorstehend beschriebenen Art und Weise unterteilt werden.

Der zusätzliche Speicher dient wie ausgeführt zur Speicherung von Patientendaten (Rezepte, Arztzeugnisse, Röntgenbilder, Krankengeschichte, etc.). Im Unterschied zu der Speicherkapazität von 256 Kilobyte bei herkömmlichen Chipkarten kann der zusätzliche Speicher eine Kapazität von bis zu mehreren Gigabyte erreichen. Typischerweise wird als Minimalkapazität des zusätzlichen Speichers eine Grösse von 1GByte betrachtet.

Die Erfindung wird im Folgenden anhand der Zeichnungen und in Ausführungsbeispielen genauer erläutert. Es zeigen:
- Figur 1a bis 1c: Seitenansichten und Draufsicht eines ersten Ausführungsbeispiels eines erfindungsgemässen Datenträgers,
- Figur 2: Draufsicht auf ein alternativen Ausführungsbeispiel eines erfindungsgemässen Datenträgers,
- Figuren 3a und 3b: Seitenansicht und Draufsicht eines erfindungsgemässenDatenträgers mit zusätzlichen Kommunikationsmodulen und
- Figuren 4a bis 4c: verschiedene Ansichten eines zweiteiligen erfindungsgemässen Datenträgers.

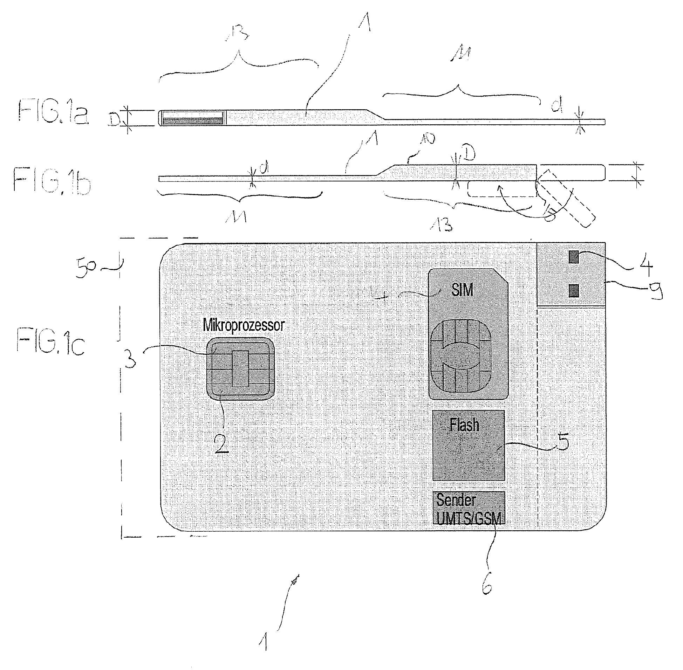

Figuren 1a und 1b zeigen in Seitenansicht und Figur 1c in Draufsicht einen Datenträger 1. Der Datenträger 1 weist wie eine herkömmliche Chipkarte eine integrierte Schaltung 2 mit einem Mikroprozessor auf. Die integrierte Schaltung 2 ist in an sich bekannter Art und Weise gemäss der Norm ISO7816 mit einer Schnittstelle 3 versehen, welche durch nicht näher bezeichnete Kontakte gebildet ist. Erfindungsgemäss ist der Datenträger 1 ausserdem mit einer zweiten Schnittstelle 4 versehen. Im Ausführungsbeispiel gemäss Figuren 1a bis 1c handelt es sich bei der zweiten Schnittstelle 4 um eine USB Schnittstelle. Eine Klappe kann weggeklappt oder weggeschoben werden. Die Aufnahme eines Akkus in die Lasche kann vorgesehen sein. Das Gehäuse 10 ist typischerweise aus Metall ausgebildet. Es sind aber auch andere Materialien denkbar. Das Gehäuse 10 sollte wenn möglich wasserdicht ausgebildet sein.

Auf diese Weise ergibt sich eine möglichst einfache Zugänglichkeit des Kontaktbereichs 9 der zweiten Schnittstelle 4. Der Vorteil der verschwenkbaren Anordnung liegt in der kompakten Ausgestaltung, welche bei herausgeschwenktem USB-Anschluss eine einfache Verbindung zu einem USB-Anschluss an einem Personal Computer erlaubt.

Der Datenträger 1 ist ausserdem mit einem Flashspeicher 5 ausgebildet. Der Flashspeicher 5 ist typischerweise ein Speicher des Typs NAND mit einer Speicherkapazität von 1GByte.

Die integrierte Schaltung 2 ist ebenfalls mit der zweiten Schnittstelle (4) verbunden, sodass von der Rechneranordnung auf in der integrierten Schaltung 2 gespeicherten Daten zugegriffen werden kann.

Der Datenträger 1 kann mit einer Aufnahme für eine SIM-Karte 14 und mit einem Sender 6 für mobile Telefonie-Standards versehen sein. Typischerweise kann es sich bei dem Sender 6 um ein UMTS- oder ein GSM-Sende- und Empfangsmodul handeln.

Wie in Figur 1a und 1b ersichtlich ist, ist die Dicke d des Gehäuses 10 in einem Bereich 11 benachbart zu den Kontakten der ersten Schnittstelle 3 kleiner als die Dicke D in einem Bereich 13 im Abstand zu diesen Kontakten. Dadurch wird ermöglicht, dass der Datenträger 1 in einen herkömmlichen Chipkartenleser 50 (nur schematisch dargestellt) eingeführt werden kann. Aufgrund der grösseren Dicke D ist aber im Gehäuse 10 ausreichend Platz zur Aufnahme der Komponenten, insbesondere der SIM-Karte 14, des Flashspeichers 5 und des Mobiltelefoniemoduls 6 vorhanden.

Ähnlich wie bei einem Mobiltelefon kann das Gehäuse zum Einsetzen der SIM-Karte 14 geöffnet werden. Für normale Datenübertragung ist eine Sende- und Empfangseinheit im Mobiltelefoniemodul integriert. Es ist aber auch denkbar, zur Verbesserung der Empfang- und Sendeleistung eine externe Antenne vorzusehen.

Typischerweise beträgt die Dicke D des Gehäuses 10 im Bereich 13 3 mm. Die Dicke d im Bereich 11 entspricht der Dicke gemäss der Norm ISO/IEC7816. Die Aussendimensionen des Datenträgers 1 entspricht der Grösse ID-1, d.h. 85,60 x 53,98 mm. Die Dicke beträgt 0,76 mm.

Erfindungsgemäss können Daten in nur lesbar und in schreib- und lesbare Bereiche sowie in öffentliche (nur lesbare) und private (welche nur lesbar oder lesbar und schreibbar sein können) Bereiche aufgeteilt werden. Dies kann beispielsweise durch unterschiedliche Spreicherpartitionen erfolgen, welche hardware- und/oder softwaremässig in an sich bekannter Art und Weise geschützt sein können. Typischerweise können allgemein zugängliche Informationen wie beispielsweise ein Rezept durch den Arzt in einen öffentlichen (oder privaten), jedoch nur lesbaren Bereich geschrieben werden. Dieser Bereich ist für den Patienten und für andere Dritte hardwaremässig geschützt und dadurch nicht veränderlich.

Im Chip sind gemäss Anforderungen an eine Gesundheitskarte die entsprechenden Daten gespeichert. Auf dem Flashspeicher können beliebige zusätzliche Daten abgelegt werden. Ausserdem besteht auch die Möglichkeit, bei allfälligen zukünftigen Anforderungen einer Gesundheitskarte entsprechende Daten auf dem Flashspeicher zu speichern.

Zusätzlich zum Mikroprozessor für die herkömmliche Chipkarte ist die erfindungsgemässe Karte mit einem weiteren Mikroprozessor versehen, welche die Kommunikation mit der USB-Schnittstelle und die Kommunikation mit allfälligen weiteren Modulen steuert. Typischerweise werden dazu spezifische Mikroprozessoren je nach Anwendungsbedürfnissen bereitgestellt.

Die Speicherkarte kann ausserdem auf nicht gezeigte Art und Weise mit einem GPS-Modul versehen sein, welches beispielsweise zum Lokalisieren eines Patienten in Notfallsituationen dient.

Der Speicher 5 ist mit dem Mikroprozessor der integrierten Schaltung 2 verbunden, sodass über die zweite Schnittstelle 4 auf in der integrierten Schaltung zwei gespeicherte Daten zugegriffen werden kann

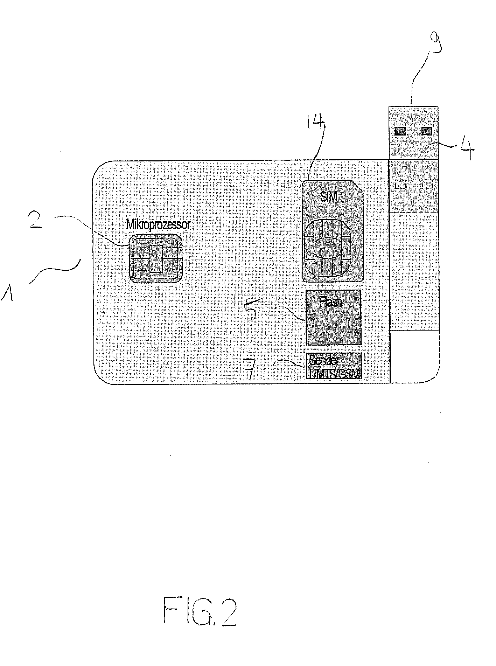

Figur 2 zeigt eine Draufsicht auf ein alternatives Ausführungsbeispiel der in Figur 1a bis 1c gezeigten Speicherkarte. Im Unterschied zum Ausführungsbeispiel gemäss Figur 1 ist der Kontaktbereich 9 der zweiten Schnittstelle 4 lateral ausziehbar oder ausschiebbar. Die ausziehbare USB-Schnittstelle ist mit Schiebekontakten und einem Anschlag versehen, so dass in ausgefahrenem Zustand eine optimale Verbindung zu einem Personal Computer möglich ist.

Im Übrigen entspricht der Datenträger 1 gemäss Figur 2 dem in Figuren 1a bis 1c gezeigten Datenträger.

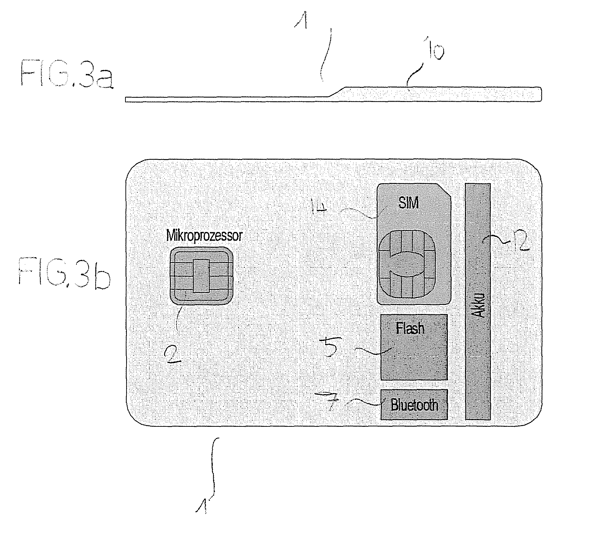

Figuren 3a und 3b zeigen in Seitenansicht bzw. Draufsicht ein weiteres Ausführungsbeispiel eines erfindungsgemässen Datenträgers 1. Im Unterschied zu der Ausführungsform in den Figuren 1a bis 1c ist der Datenträger 1 gemäss Figuren 3a und 3b mit einer zweiten Schnittstelle in Form eines Moduls 7 zur Bluetooth-Übermittlung und mit einem Akku 12 versehen. In Figur 3b nicht mehr gezeigt ist das Modul 6 für mobile Telefonie, welches in dem Datenträger 1 gemäss Figuren 3a und 3b jedoch vorhanden sein kann. Ausserdem kann auch ein Modul zur drahtlosen Kommunikation für W-LAN-Verbindungen (nicht gezeigt), ein Modul mit GPS-Funktionalitäten (nicht gezeigt) und ein Modul für Near Field Communication (NFC mittels RFID, aktiv od. passiv) angeordnet sein. Bei der Verwendung eines Bluetooth-Moduls 7 oder eines Wireless LAN Moduls kann funktional auf die USB-Schnittstelle verzichtet werden, sie kann aber optional trotzdem vorhanden sein. In der Ausführungsform gemäss Figuren 3a und 3b ist also die zweite Schnittstelle durch das Bluetooth-Modul 7 oder durch ein W-LAN-Modul gebildet.

Der Datenabgleich über Mobilfunk-Standards ermöglicht die weltweite Synchronisierung der Daten mit einem zentralen "Data-Harbour". Somit können z.B. aktuelle Daten von einem Spital (Krankengeschichte, Rezepte, etc.) drahtlos direkt auf die Karte gesendet werden. Somit besteht die Möglichkeit, dass auf der Karte stets die aktuellsten Daten vorhanden sind (push-Funktionalität) unabhängig vom jeweiligen Aufenthaltsort des Patienten. Auch erlaubt diese Synchronisations-Möglichkeit in Notfällen die Anforderung weiterer Daten (z.B. Second Opinion) und stellt ein sicheres und ständiges Backup sicher.

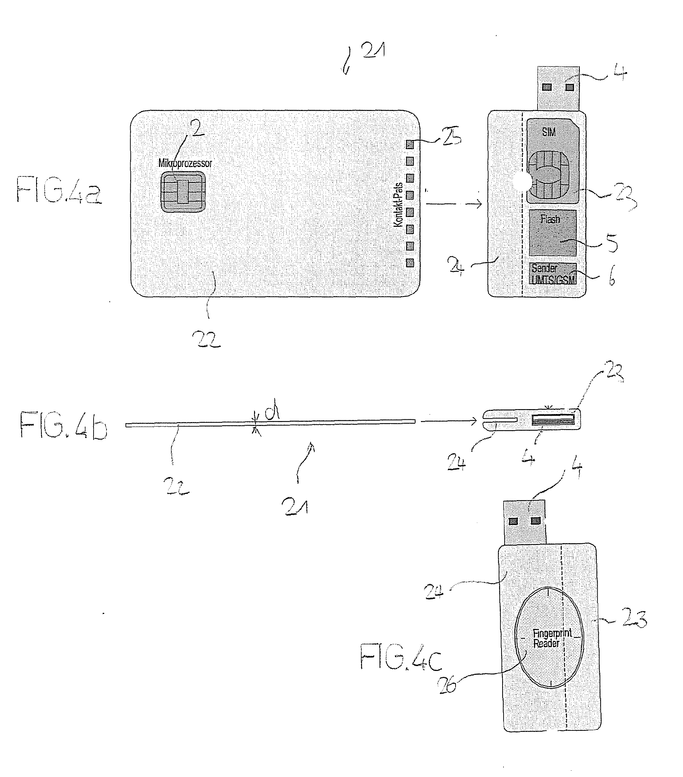

Figuren 4a bis 4c zeigen eine alternative Ausführungsform eines Datenträgers 21. Der Datenträger 21 ist zweiteilig ausgebildet. Ein Kartenteil 22 in der Form einer herkömmlichen Chipkarte mit einer integrierten Schaltung 2 ist zusätzlich mit Kontaktpins 25 versehen. Der Datenträger 21 weist ausserdem ein Speicherteil 23 auf. Im Speicherteil 23 ist der Flashspeicher 5 und optional ein Sendemodul 6 für mobile Telefonie sowie nicht gezeigte Module für Bluetooth-Übertragung oder W-LAN-Übertragung, Modul für NFC, Modul für GPS-Funktionalität, ein Fingerprint Reader zur eindeutigen Identifikation sowie ein nicht gezeigter optionaler Akku vorhanden. Das Speicherteil 23 weist eine dritte Schnittstelle 24 auf. In die Schnittstelle 24 ist das Kartenteil 22 so einsteckbar, dass die Kontaktpins 25 des Kartenteils 22 mit nicht gezeigten Kontakten der Schnittstelle 24 in Verbindung treten. Das Speicherteil 23 ist ausserdem in bekannter Weise mit einem USB-Anschluss 4 versehen.

In Figur 4b ist eine Seitenansicht der Anordnung in Figur 4a gezeigt. Die Dicke d des Kartenteils 22 entspricht der Dicke von herkömmlichen Chipkarten.

Figur 4c zeigt eine Untenansicht des Speicherteils 23. In Figur 4c ist ausserdem ein Fingerabdruckleser 26 gezeigt, mittels welchem eine Verschlüsselung der auf dem Speicherteil 23 enthaltenen Daten möglich ist. Der Fingerabdruckleser kann aber auch weitergehende Identifikations- und Authentifikationsprüfungen übernehmen.

Die im Zusammenhang mit den Figuren 1 bis 4 gezeigten Elemente wie Fingerabdruckleser, Bluetooth- oder USB-Schnittstellen, drahtlose Telefonie oder W-LAN-Module sowie dem GPS-Modul und NFC-Modul können selbstverständlich in beliebiger Art und Weise miteinander kombiniert werden.

## Patentansprüche

1. Datenspeicher (1, 21), insbesondere zur Verwendung als Gesundheitskarte,
mit einer integrierten Schaltung (2) mit einer ersten Schnittstelle (3), zum Datenaustausch zwischen dem Datenspeicher (1) und einem Chipkartenleser (50) und
mit einer zweiten Schnittstelle (4, 7) zum Datenaustausch zwischen dem Datenspeicher (1; 21) und einer Rechenanordnung,
**dadurch gekennzeichnet, dass** der Datenspeicher (1; 21) mit einem zusätzlichen Speicher, insbesondere einem Flashspeicher (5) versehen ist, der wenigstens mit der zweiten Schnittstelle (4; 7) verbunden oder verbindbar ist.

2. Datenspeicher (1; 21) nach Anspruch 1, **dadurch gekennzeichnet, dass** die zweite Schnittstelle eine USB-Schnittstelle (4), eine Bluetooth-Schnittstelle (7) oder eine W-LAN-Schnittstelle ist.

3. Datenträger (1; 21) nach einem der Ansprüche 1 oder 2, **dadurch gekennzeichnet, dass** der Datenträger (1; 21) mit Mitteln zur drahtlosen Datenübertragung, insbesondere mit einem Mobiltelefonie-Modul (7) oder einem NCF Modul mittels RFID versehen ist.

4. Datenträger (1; 21) nach einem der Ansprüche 1 bis 3, **dadurch gekennzeichnet, dass** der zusätzliche Speicher (5) in öffentliche und private Bereiche unterteilt ist.

5. Datenträger (1; 21) nach einem der Ansprüche 1 bis 4, **dadurch gekennzeichnet, dass** der zusätzliche Speicher (5) in beschreibbare und nur lesbare Abschnitte unterteilt ist.

6. Datenträger (1; 21) nach einem der Ansprüche 1 bis 5, **dadurch gekennzeichnet, dass** der Datenträger (1; 21) mit einer Stromversorgung, insbesondere einem Akku (12) versehen ist.

7. Datenträger (1; 21) nach einem der Ansprüche 1 bis 6, **dadurch gekennzeichnet, dass** die zweite Schnittstelle (4) einen Kontaktbereich (9) aufweist, der von dem Datenträger (1; 21) wegbewegbar, insbesondere herausschiebbar oder wegklappbar ist.

8. Datenträger (1) nach einem Ansprüche 1 bis 7, **dadurch gekennzeichnet, dass** der Datenträger (1) in einem Gehäuse (10) untergebracht ist, welches in einem Randbereich (11) benachbart zu Kontakten der ersten Schnittstelle (3) die Dimension einer Standardchipkarte aufweist und dass in einem Randbereich (13) entfernt von Kontakten der integrierten Schaltung (3) das Gehäuse (10) eine grössere Dicke (D) aufweist.

9. Datenträger (1) nach einem der Ansprüche 1 bis 8, **dadurch gekennzeichnet, dass** der Datenträger (1) einteilig ausgebildet ist.

10. Datenträger nach einem der Ansprüche 1 bis 8, **dadurch gekennzeichnet, dass** der Datenträger (21) zweiteilig ausgebildet ist,
wobei in einem Speicherteil (23) der zusätzliche Speicher (5) und die zweite Schnittstelle (4) angeordnet ist, in einem Kartenteil (22) die erste Schnittstelle (3) und die integrierte Schaltung (2) angeordnet ist und
wobei das Speicherteil (23) eine dritte Schnittstelle (24) zum Datenaustausch mit dem Kartenteil (22) aufweist.

11. Datenspeicher (23), insbesondere Flashspeicher, welcher eine Schnittstelle (4; 7) zum Datenaustausch mit einer herkömmlichen Rechenanordnung aufweist, **dadurch gekennzeichnet, dass** der Datenspeicher (23) eine weitere Schnittstelle (24) zum Datenaustausch mit einer Chipkarte (22) aufweist.

12. Datenspeicher (23) nach Anspruch 11, **dadurch gekennzeichnet, dass** die Schnittstelle zum Datenaustausch mit einer Rechneranordnung eine USB-Schnittstelle (4) eine Bluetooth-Schnittstelle (7) oder eine W-LAN-Schnittstelle ist.

13. Datenspeicher (23) nach einem der Ansprüche 11 oder 12, **dadurch gekennzeichnet, dass** der Datenspeicher (23) zusätzlich mit Mitteln zur drahtlosen Datenübertragung, insbesondere einem Mobiltelefonie-Modul (6) versehen ist.

14. Datenspeicher (23) nach einem der Ansprüche 11 bis 13, **dadurch gekennzeichnet, dass** der zusätzliche Speicher (5) in öffentliche und private Bereiche unterteilt ist.

15. Datenspeicher nach einem der Ansprüche 11 bis 14, **dadurch gekennzeichnet, dass** der zusätzliche Speicher (5) in beschreibbare und nur lesbare Abschnitte aufgeteilt ist.
